# EUROPEAN PATENT SPECIFICATION

(11) **EP 2 203 722 B1**
(45) Date of publication and mention of the grant of the patent: **12.08.2015**
(21) Application number: 08806669.1
(22) Date of filing: 23.09.2008
(51) Int. Cl.: G01F 19/00

(54) **INTEGRALLY FORMED RECEPTACLE WITH DEPTH MARKS ON THE SIDEWALL**
INTEGRAL GEBILDETE AUFNAHME MIT TIEFEN MARKIERUNGEN AUF DER SEITENWAND
RECIPIENT

(30) Priority: 24.09.2007 GB 0718574
(43) Date of publication of application: 07.07.2010
(73) Proprietor: Vernacare Limited, Bolton Lancashire, BL1 2TX (GB)
(72) Inventor: PARTINGTON, Garry, Bolton Lancashire BL2 5DB (GB); NELSON, Wayne, Manchester Greater Manchester M26 3UU (GB)
(74) Representative: Manley, Nicholas Michael
(86) International application number: PCT/GB2008/050853
(87) International publication number: WO 2008/152430

(56) References cited:
- EP-A- 1 627 826
- GB-A- 2 095 977
- JP-A- 9 123 300
- JP-A- 2004 191 248
- US-A- 2 023 470
- US-A- 2 165 045
- US-A- 5 085 348
- US-A1- 2005 029 297

## Description

This invention relates to moulded paper pulp jugs.

Disposable, paper pulp receptacles are widely used in hospitals, care homes and the like, where it is desirable, for hygiene reasons, and to minimise the risk of cross-infection, to have single-use receptacles. Conveniently, moulded paper pulp disposable receptacles can be macerated on-site after use for immediate disposal into a drain or sewer. One example of a moulded paper pulp receptacle is a moulded paper pulp jug.

Whilst functionally adequate, known moulded paper pulp receptacles suffer a number of disadvantages compared to reusable receptacles, namely:
- It is difficult to estimate the volume of liquid within the receptacle, and the known solution of providing a graduated dipstick provides only a subjective, and/or inaccurate estimate of the receptacle's contents.
- Due to the nature of the manufacturing process, known single-use receptacles generally have a rudimentary spout that affords poor control of liquid during pouring.
- Known single use receptacles can be difficult to handle/manipulate, especially where the user wears gloves.
- Being manufactured of moulded paper pulp, known single-use receptacles can have a flimsy feel, and/or can be prone to deformation whilst being gripped.

This invention aims to provide a solution to one or more of the above problems. Additionally or alternatively, this invention aims to provide an improved receptacle.

Reference is also made to US 2 135 045, which discloses a calibrated self-supporting sanitary spoon comprising a calibrated bowl portion and a handle portion extending arcuately upwardly and away from the bowl.

According to the invention, there is provided a moulded paper pulp jug comprising a flat or substantially flat base wall and a sidewall extending upwardly from the base wall to define a liquid receiving volume, the sidewall being shaped to form a grip portion having first and second opposed finger-receiving recessed portions and a pouring spout on the opposite side of the jug from the grip portion, the sidewall further comprising a plurality of integrally-formed projections and/or indentations arranged to indicate, in use, the depth of liquid within the liquid receiving volume wherein each of the said opposed recesses in the sidewall comprises a gripping surface comprising a concavity in the exterior of the sidewall which forms a projection projecting into the liquid receiving volume and comprising a shoulder portion at its upper end and wherein the grip portion comprises a base wall located above the level of the jug base wall, and comprises a tapered side wall.

The plurality of integrally-formed projections and/or indentations may together form a graduated scale for estimating or measuring, in use, the volume of liquid within the liquid receiving volume of the receptacle. Since the scale is integrally formed with the sidewall, it is not possible to incorrectly position or orient the scale (as can be done with a known dipstick). Thus, provided the receptacle is always placed in a known orientation, e.g. on a flat surface, the quantity of liquid within the liquid retaining volume can be more accurately estimated/measured.

Advantageously also, since the level of the liquid within the liquid retaining volume of the receptacle is read off against a series of integrally-formed projections/indentations, there is no need to provide a printed scale on the inner surface of the receptacle, which printing constitutes, in any event, an additional manufacturing step, and which printed scale is difficult to register consistently with respect to a datum of the receptacle.

The indentions/projections may comprise dots and/or dashes and/or other indicia, e.g. letters and/or numerals. Advantageously, the indentions/projections can comprise a series of spaced-apart major dashes and one or more minor dashes located between respective pairs of spaced-apart major dashes, and numerals indicating the volume of liquid in the receptacle corresponding to each of the major dashes and/or minor dashes or dots.

Also disclosed, but not forming part of the invention, is a receptacle comprising a flat or substantially flat base wall, a sidewall extending upwardly from the base wall to define a liquid receiving volume, the upper edge of the sidewall defining the periphery of an opening located above the base wall, wherein the sidewall comprises a spout comprising a generattyv-shaped channel that intersects, and extends downwardly from, the upper edge of the sidewall towards the base wall, and wherein the upper edge of the sidewall is overturned, except in the region of thespout

The upper edge of the sidewall is preferably overturned, except in the region of the tip of the spout. The majority of the upper edge of the sidewall may lie in a first, substantially flat plane, and the upper edge of the sidewall in the vicinity of the spout may lie in a second plane inclined with respect to the first plane. The second plane is preferably substantially flat.

The radius of curvature of the overturned upper edge of the sidewall may be smaller in the vicinity of the spout than around the remainder of the receptacle. The upper edge of the sidewall in the vicinity of the spout may have a sharper edge than the upper edge of the sidewall around the remainder of the receptacle.

The upper edge of the sidewall at the tip of the spout may have a sharper edge than the upper edge of the sidewall around the remainder of the receptacle.

The v-shaped channel may comprise a pair of substantially triangular, planar surfaces that meet along a valley line, the internal radius of curvature of the valley being less than 5mm. The internal radius of curvature of the valley is preferably less than 2mm.

The above spout configuration affords better control of the liquid during pouring, since the liquid pours over the rim of the receptacle at a more precisely defined position compared to known disposable receptacles.

Preferably, the upper edge of the sidewall is formed as an integral part of the sidewall.

Preferably, the spout is formed integrally with the sidewall.

Also disclosed, but not forming part of the invention, is a receptacle comprising a flat or substantially flat base wall, a sidewall extending upwardly from the base wall to define a liquid receiving volume, the upper edge of the sidewall defining the periphery of an opening located above the base wall, wherein the sidewall comprises a pair of opposed recesses which form a grip means for grasping the receptacle, each of the said recesses comprising a gripping surface comprising a concavity in the exterior of the sidewall which forms a projection projecting into the liquid receiving volume and comprising a shoulder portion at its upper end.

The shoulder portion may comprise a substantially planarwall portion.

The substantially planar wall portions may be substantially parallel to the base wall. The substantially planar wall portions are preferably substantially flat.

The substantially planar wall portions are arranged, in use, to abut the user's thumb and forefinger, whilst the remaining fingers of the user's hand grasp the gripping surfaces. Such a configuration provides an amount of triangulation, which enables the receptacle to be more securely gripped, thereby facilitating manipulation thereof.

A stiffening shoulder may also be provided in the vicinity of the grip means. Where provided, the stiffening shoulder may comprise a surface that projects into the liquid receiving volume of the receptacle. The inwardly projecting surface of the stiffening shoulder may extend around a portion of the receptacle corresponding substantially to the position of the grip portion. The stiffening shoulder may be located between the rim of the receptacle and the shoulder of the grip portion.

The stiffening shoulder and/or the shoulders both cause the surface of the receptacle to change direction, which can increase the stiffness of the receptacle in the region of the grip portion. Advantageously, increased stiffness can reduce the likelihood of the receptacle being deformed during use, thereby enabling it to be gripped more securely and/or manipulated more easily.

The stiffening shoulder is preferably located between the grip means and the upper edge of the sidewall.

The receptacle may further comprise a pouring spout.

Preferably the pouring spout and grip means are on opposite sides of the base wall.

Also disclosed, but not forming part of the invention, is a receptacle comprising a flat or substantially flat base wall, a sidewall extending upwardly from the base wall to define a liquid receiving volume, the upper edge of the sidewall defining the periphery of an opening located above the base wall, a grip means and a stiffening shoulder in the vicinity of the grip means.

The grip means may comprise a gripping surface comprising a concavity in the exterior of the sidewall which forms a projection projecting into the liquid receiving volume and a shoulder portion at its upper end.

The grip means may comprise two opposed concavities in the exterior of the sidewall which forms projections projecting into the liquid receiving volume, the opposed concavities being adapted for gripping by the opposed thumb and fingers respectively of a user.

The stiffening shoulder may comprise a surface that projects into the liquid receiving volume of the receptacle, which inwardly projecting surface of the stiffening shoulder may extend around a portion of the receptacle corresponding substantially to the position of the grip portion.

Preferably the stiffening shoulder is located between the upper edge of the sidewall and the grip means.

The stiffening shoulder is preferably located between the upper edge of the sidewall and the shoulder portion of the grip portion.

The receptacle may comprise a pouring spout.

In one embodiment the pouring spout and the grip means are on opposite sides of the base wall.

Also disclosed, but not forming part of the invention, is a receptacle comprising a flat or substantially flat base wall, a sidewall extending upwardly from the base wall to define a liquid receiving volume, an overturned upper edge of the sidewall defining a periphery of an opening located above the base wall, wherein the radius of curvature of the overturned upper edge of the sidewall is less than ten millimetres.

The radius of curvature of the overturned upper edge of the sidewall is preferably less than 5mm.

Advantageously, this configuration may give rise to a higher rim stiffness compared to an equivalent amount of material used in a rim having a greater radius of curvature. In other words, the smaller the radius of curvature of the rim, the greater the rim stiffness for a given amount of material.

Additionally, since the radius of curvature of the rim is smaller than in known receptacles, the surface area of the rim of the receptacle is reduced, giving rise to a reduction in material usage.

In all of the above arrangements, the receptacle may be manufactured of paper pulp. The wall thickness of the paper pulp can be between 1mm and 2mm.

The opening preferably communicates directly with the liquid receiving volume. The receptacle may be a jug.

A preferred embodiment of the invention shall now be described, by way of example only, with reference to the accompanying drawings in which:
Figure 1 is a perspective view from above of an embodiment of a jug according to the invention;
Figure 2 is a perspective view from below of the jug shown in Figure 1;
Figure 3 is a side view of the jug shown in Figures 1 and 2;
Figure 4 is a first end view of the jug shown in Figures 1 to 3, as viewed looking from left to right in Figure 3;
Figure 5 is a second end view of the jug shown in Figures 1 to 4, as viewed looking from right to left in Figure 3;
Figure 6 is a plan view of the jug shown in Figures 1 to 5; and
Figure 7 is a view from below of the jug shown in Figures 1 to 6.

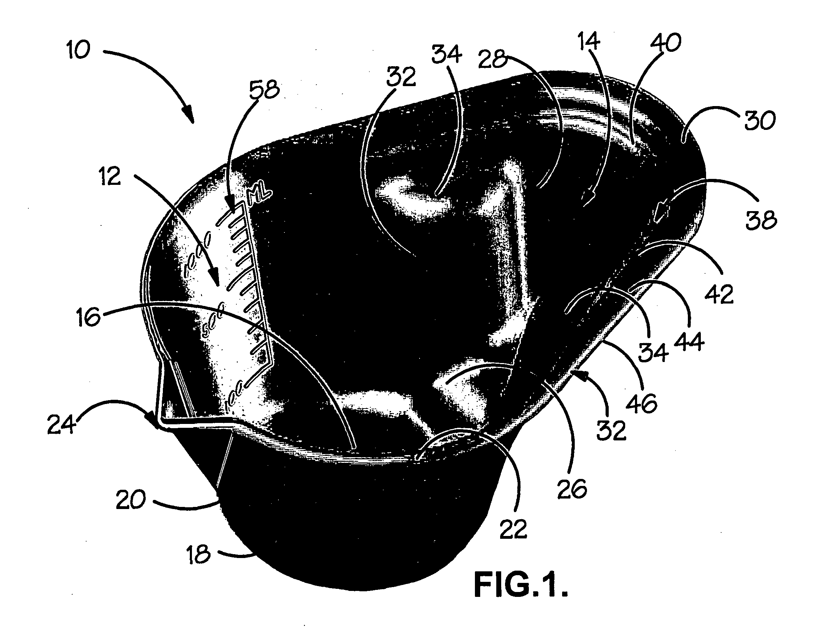

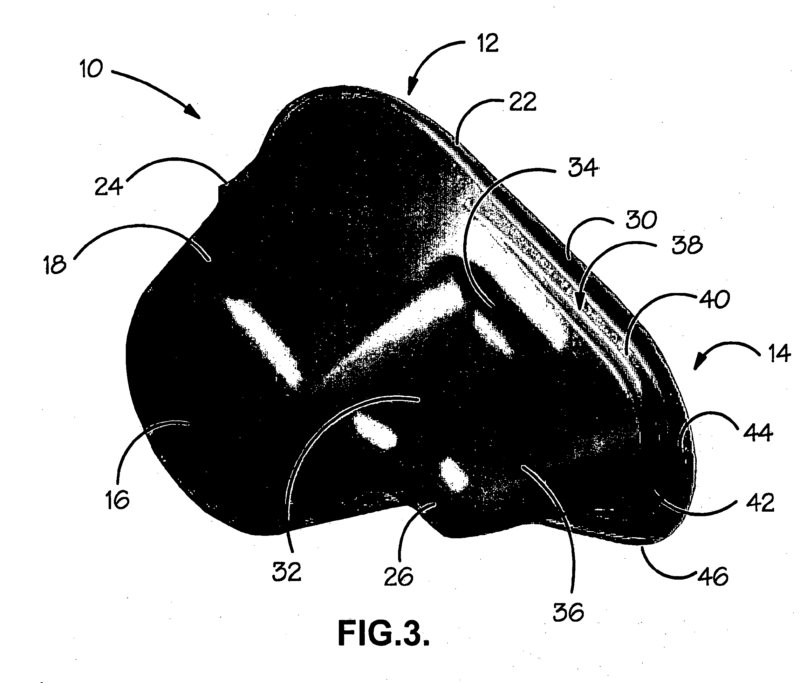

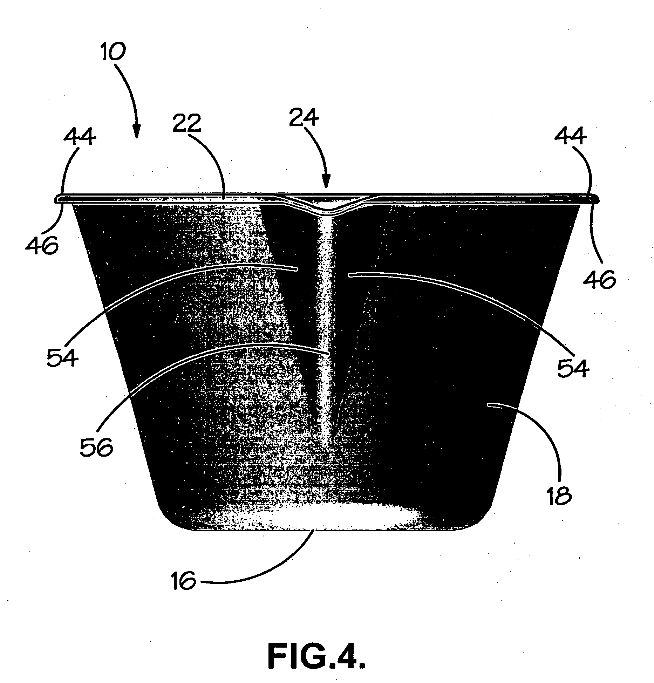

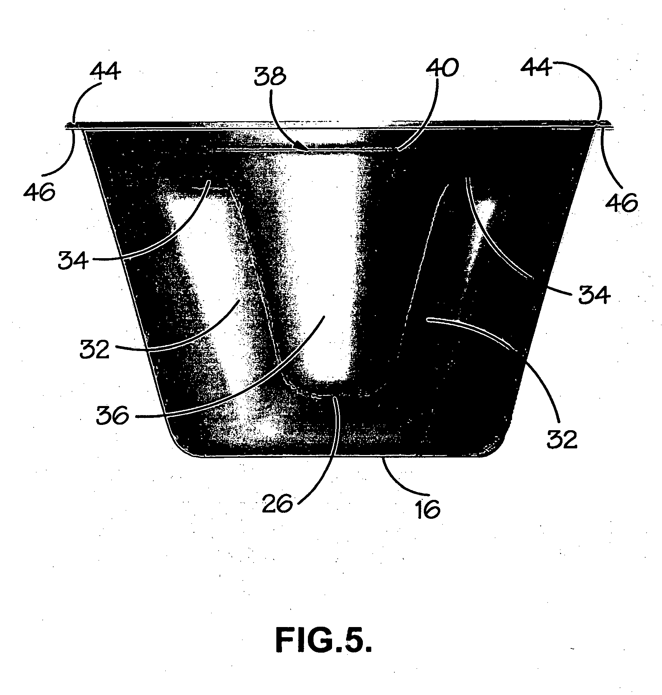

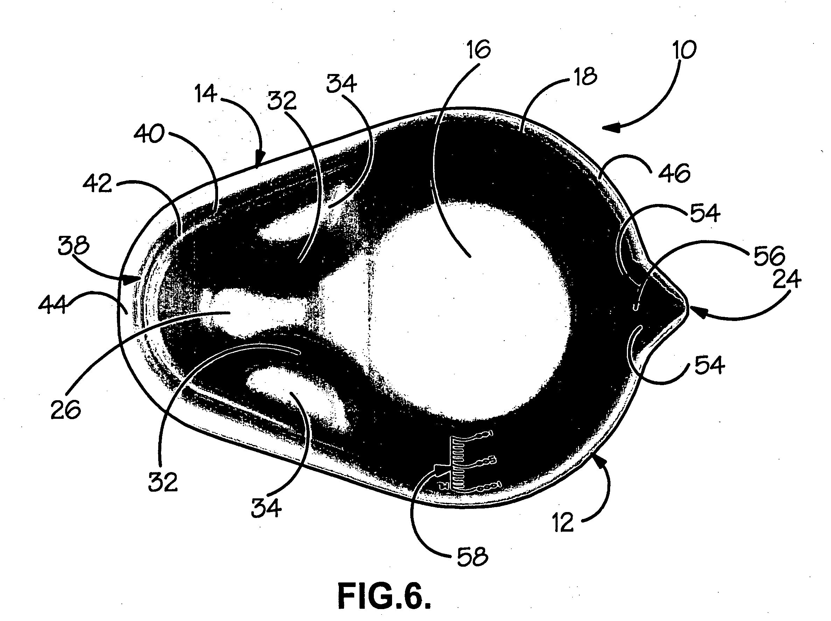

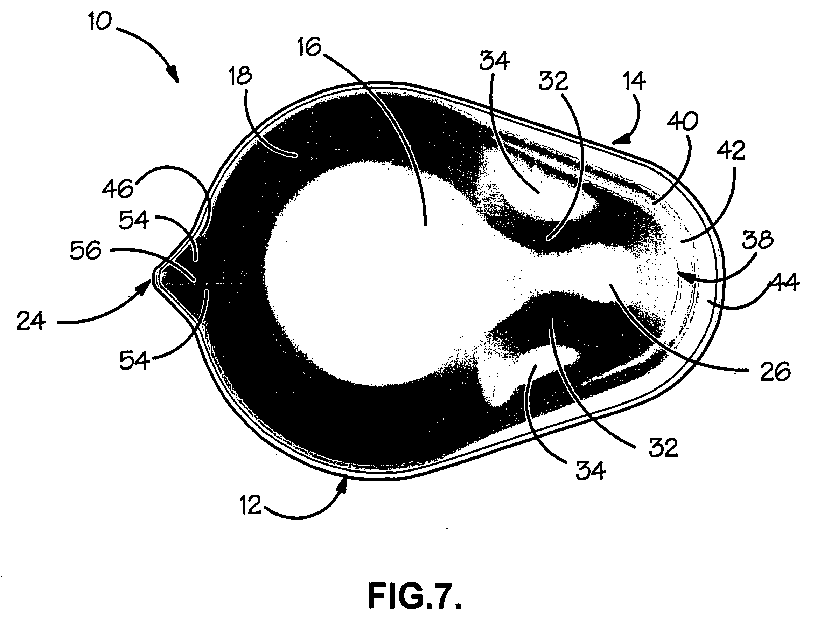

In Figures 1 to 7, a jug 10 manufactured from moulded paper pulp comprises an upwardly open hollow receptacle having a main liquid-receiving portion 12, which communicates with a grip portion 14. The main liquid-receiving portion 12 comprises a flat, generally circular base wall 16 and a sidewall 18 extending upwardly from the base wall 16. The sidewall 18 tapers inwardly from its upper edge 20 towards the base wall 16 and the upper edge of the sidewall 18 is formed into an overturned lip 22. The lip 22 is formed into a pouring spout 24 at a position on the opposite side of the base wall from the grip portion 14. When viewed from above the jug 10 has a teardrop shape and is wider towards the spout than towards the grip portion 14.

The grip portion 14 comprises a generally flat base wall portion 26 which is located above the level of the base wall 16 of the main liquid-receiving portion 12, and a tapered sidewall 28, which extends upwardly from the base wall 26 and merges smoothly with the sidewall 18 of the main liquid-receiving portion 12. The upper edge of the sidewall 28 is formed into an overturned lip 30, which merges smoothly with the lip 22 of the main liquid-receiving portion 12.

The sidewall 28 of the grip portion 14 is formed into two opposed finger recesses 32 on opposite sides of the grip portion 14, which project into the interior of the jug 10. The upper end of each of the finger recesses 32 is defined by a generally planar face 34, which forms a shoulder in the interior of the jug 10. The recesses allow the user's hand to grip the grip portion 14.

The jug 10 is moulded from paper pulp as a single unitary item and all of the features of the jug including the base wall 16, overturned lip 22, spout 24, grip portion 14, overturned lip 30, etc. are formed integrally with each other.

In use, a user's hand grips the grip portion 14 such that his/her thumb and forefinger simultaneously engage opposite finger recesses 32 and shoulders 34. The user's three remaining fingers engage one of the finger recesses 32 at points located below the height of the shoulders 34, and a convex portion 36 of the grip 14 engages the user's palm.

A stiffening shoulder 38 located at a level between the lip 30 of the jug 10 and the shoulders 34 serves to stiffen the jug 10 in the vicinity of the grip portion 14. The stiffening shoulder 38 comprises a radiused edge 40 and a generally flat, u-shaped shelf portion 42 (when viewed from above) that extends around the rear half of the jug 10. The shelf portion 42 is widest at the rear of the jug 10 where it aligns with the convex portion 36 of the grip 14, and tapers at either end to blend into the sidewalls 18 of the jug 10 at a point located above the circular base wall 16 thereof.

The rim 22, 30 of the jug 10 comprises an outwardly directed flange 44 and an overturned peripheral lip portion 46. The overturned peripheral lip portion 46 has a small internal radius of curvature, which radius is approximately 2mm.

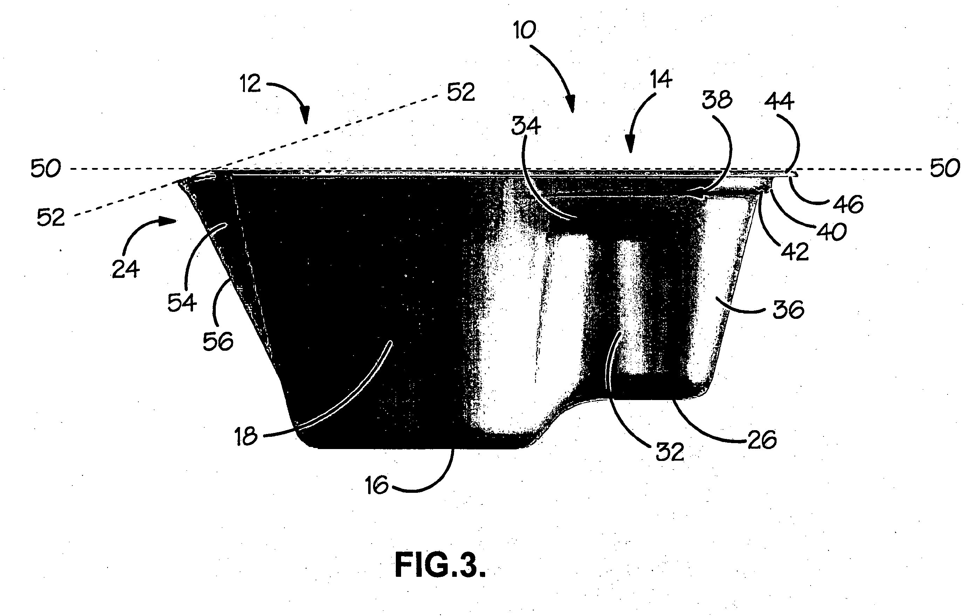

As can be seen best from Figure 3, the majority of the lip 22, 30 of the jug 10 lies in a first generally flat plane 50. However, in the vicinity of the spout 24, the lip 22 lies in a second, flat plane 52 inclined with respect to the first plane 50. In the vicinity of the spout 24, the lip 22 comprises an outwardly directed flange portion 44, but has no overturned portion.

The spout 24 comprises a pair of generally flat, triangular wall portions/surfaces 54 whose edges meet along a valley line 56 to form a generally v-section channel that intersects, and extends downwardly from, the lip 22 of the jug 10 towards the base wall 16. The v-section channel guides liquid within the liquid receiving volume 12, 14 to the tip of the spout 24 during pouring.

The internal surface of the sidewall 18 is provided with a scale 58 for indicating the quantity of liquid (not shown) within the liquid receiving volume 12. The scale 58 is comprised of integrally moulded indentions in the sidewall 18 that form the major and minor graduations of the scale 58. Numbers and letters are also integrally formed in the sidewall 18 of the jug 10 to facilitate reading the scale 58.

The pouring spout 24 and the grip portion 14 lie on a plane passing perpendicularly through the base wall 16, about which the lug is symmetrical (apart from the scale 58).

## Claims

1. A moulded paper pulp jug (10) comprising a flat or substantially flat base Wall (16) and a sid ewal (18) extending upwardly from the base wall to define a liquid receiving volume (12), the sidewall (18) being shaped to form a grip portion (14) having first and second opposed finger-receiving recessed portions (32) and a pouring spout (24) on the opposite side of the jug from the grip portion, the sidewall (18) further comprising a plurality of integrally-formed projections and/or indentations arranged to indicate, in use, the depth of liquid within the liquid receiving volume wherein each of the said opposed recesses (32) in the sidewall (18) comprises a gripping surface comprising a concavity in the exterior of the sidewall (18) which forms a projection projecting into the liquid receiving volume and comprising a shoulder portion (34) at its upper end and wherein the grip portion (14) comprises a base wall (26) located above the level of the jug base wall (16), and comprises a tapered side wall (28).

2. A jug as claimed in claim 1, wherein the plurality of integrally-formed projections and/or indentations together form a graduated scale (58).

3. A jug as claimed in claim 1 or claim 2, wherein the indentions/projections comprise dots and/or dashes and/or letters and/or numerals.

4. A jug as claimed in any of the preceding claims, wherein the sidewall (18) comprises an upper peripheral edge (20) and the recessed portions (32) are located below the upper peripheral edge of the sidewall (18).

5. A jug as claimed in any of the preceding claims, wherein the shoulder portion (34) comprises a substantially planar portion.

6. A jug as claimed in any of the preceding claims, wherein the substantially planar portion extends substantially parallel to the base wall (16).

7. A jug as claimed in any of the preceding claims, wherein the upper edge (20) of the sidewall (18) defines the periphery of an opening located above the base wall (16) and further comprising a stiffening shoulder (38) in the vicinity of thegrip means (14).

8. A jug as claimed in any of the preceding claims, wherein the sidewall (18) comprises a spout (24) comprising a v-shaped channel that intersects, and extends downwardly from, the upper edge (20) of the sidewall (18) towards the base wall (16), and wherein the upper edge (20) of the sidewall is overturned, except in the region of the spout (24).

9. A jug as claimed in any of the preceding claims, comprising an overturned upper edge (46) of the sidewall (18), wherein the radius of curvature of the overturned upper edge (46) of the sidewall is less than ten millimetres.

## Patentansprüche

1. Krug (10) aus geformter Papiermasse, umfassend eine flach oder im Wesentlichen flache Bodenwand (16) und eine Seitenwand (18), die sich von der Bodenwand nach oben erstreckt, um ein Flüssigkeitsaufnahmevolumen (12) zu definieren, wobei die Seitenwand (18) gestaltet ist, um einen Griffabschnitt (14) mit einem ersten und einem zweiten entgegengesetzten Fingeraufnahme-Aussparungsabschnitt (32) und eine Gießtülle (24) auf der gegenüberliegenden Seite des Krugs von dem Griffabschnitt zu bilden, wobei die Seitenwand (18) weiter mehrere einstückig gebildete Vorsprünge und/oder Vertiefungen umfasst, die angeordnet sind, um in Gebrauch die Tiefe von Flüssigkeit in dem Flüssigkeitsaufnahmevolumen anzuzeigen, wobei die entgegengesetzten Aussparungen (32) in der Seitenwand (18) jeweils eine Greifoberfläche umfassen, die eine Höhlung im Äußeren der Seitenwand (18) umfasst, die einen in das Flüssigkeitsaufnahmevolumen vorstehenden Vorsprung bildet und einen Absatzabschnitt (34) an ihrem oberen Ende umfasst und wobei der Griffabschnitt (14) eine über der Höhe der Krugbodenwand (16) liegende Bodenwand (26) umfasst und eine verjüngte Seitenwand (28) umfasst.

2. Krug nach Anspruch 1, wobei die mehreren einstückig gebildeten Vorsprünge und/oder Vertiefungen zusammen eine graduierte Skala (58) bilden.

3. Krug nach Anspruch 1 oder Anspruch 2, wobei die Vertiefungen/Vorsprünge Punkte und/oder Striche und/oder Buchstaben und/oder Ziffern umfassen.

4. Krug nach einem der vorangehenden Ansprüche, wobei die Seitenwand (18) einen oberen Umfangsrand (20) umfasst und die Aussparungsabschnitte (32) unter dem oberen Umfangsrand der Seitenwand (18) liegen.

5. Krug nach einem der vorangehenden Ansprüche, wobei der Absatzabschnitt (34) einen im Wesentlichen ebenflächigen Abschnitt umfasst.

6. Krug nach einem der vorangehenden Ansprüche, wobei sich der im Wesentlichen ebenflächige Abschnitt im Wesentlichen parallel zu der Bodenwand (16) erstreckt.

7. Krug nach einem der vorangehenden Ansprüche, wobei der obere Rand (20) der Seitenwand (18) den Umfang einer über der Bodenwand (16) liegenden Öffnung definiert und der weiter einen Versteifungsabsatz (38) in der Nähe des Griffmittels (14) umfasst.

8. Krug nach einem der vorangehenden Ansprüche, wobei die Seitenwand (18) eine Tülle (24) umfasst, die eine v-förmige Rinne umfasst, die den oberen Rand (20) der Seitenwand (18) kreuzt und sich von deren oberen Rand nach unten zur Bodenwand (16) hin erstreckt und wobei der obere Rand (20) der Seitenwand außer im Bereich der Tülle (24) umgekantet ist.

9. Krug nach einem der vorangehenden Ansprüche, umfassend einen umgekanteten oberen Rand (46) der Seitenwand (18), wobei der Krümmungsradius des umgekanteten oberen Rands (46) der Seitenwand weniger als zehn Millimeter beträgt.

## Revendications

1. Pichet en pâte à papier moulée (10) comprenant une paroi de base plate ou sensiblement plate (16) et une paroi latérale (18) s'étendant vers le haut depuis la paroi de base pour délimiter un volume récepteur de liquide (12), la paroi latérale (18) étant formée pour constituer une partie de préhension (14) munie d'une première et d'une deuxième parties (32) renfoncées opposées destinées à recevoir les doigts et d'un bec verseur (24) sur le côté du pichet opposé à la partie de préhension, la paroi latérale (18) comprenant de plus une pluralité de projections et/ou d'encoches formées d'un seul tenant, disposées pour indiquer, à l'usage, la profondeur du liquide situé à l'intérieur du volume récepteur de liquide, où chacun desdits renfoncements opposés (32) dans la paroi latérale (18) comprend une surface de préhension comprenant une concavité dans l'extérieur de la paroi latérale (18) qui forme une projection en saillie dans le volume récepteur de liquide et comprenant une partie en épaulement (34) à son extrémité supérieure et où la partie de préhension (14) comprend une paroi de base (26) située au-dessus du niveau de la paroi de base (16) du pichet et comprend une paroi latérale effilée (28).

2. Pichet selon la revendication 1, où la pluralité des projections et/ou encoches formées d'un seul tenant forment ensemble une échelle graduée (58).

3. Pichet selon la revendication 1 ou la revendication 2. où les projections/encoches comprennent des points et/ou des tirets et/ou des lettres et/ou des chiffres.

4. Pichet selon une quelconque des revendications précédentes. où la paroi latérale (18) comprend un bord périphérique supérieur (20) et où les parties renfoncées (32) sont situées au-dessous du bord périphérique supérieur de la paroi latérale (18).

5. Pichet selon une quelconque des revendications précédentes. où la partie en épaulement (34) comprend une partie sensiblement plane.

6. Pichet selon une quelconque des revendications précédentes. où la partie sensiblement plane s'étend sensiblement parallèlement à la paroi de base (16).

7. Pichet selon une quelconque des revendications précédentes, où le bord supérieur (20) de la paroi latérale (18) délimite la périphérie d'une ouverture située au-dessus de la paroi de base (16) et comprenant de plus un épaulement de raidissement (38) à proximité du moyen de préhension (14).

8. Pichet selon une quelconque des revendications précédentes, où la paroi latérale (18) comprend un bec verseur (24) comprenant un canal en forme de v en intersection avec le bord supérieur (20) de la paroi latérale (18) et s'étend vers le bas depuis ce bord supérieur vers la paroi de base (16), et où le bord supérieur (20) de la paroi latérale est retourné, sauf dans la région du bec verseur (24).

9. Pichet selon une quelconque des revendications précédentes. comprenant un bord supérieur retourné (46) de la paroi latérale (18), où le rayon de courbure du bord supérieur retourné (46) de la paroi latérale est moins de dix millimètres.
